# FASCICULE DE BREVET EUROPEEN

(11) **EP 0 639 131 B1**
(45) Date de publication et mention de la délivrance du brevet: **06.11.1996**
(21) Numéro de dépôt: 93910115.0
(22) Date de dépôt: 13.05.1993
(51) Int. Cl.: B62D 33/02, B62D 25/20, E01D 19/12, E04C 2/32

(54) **ELEMENT DE PLATELAGE EN TOLE PERFOREE**
AUS PERFORIERTEM BLECH GEBILDETES BELAGELEMENT
PERFORATED SHEET FLOORPLATE ELEMENT

(30) Priorité: 15.05.1992 FR 9206096
(43) Date de publication de la demande: 22.02.1995
(73) Titulaire: LOHR INDUSTRIE, F-67980 Hangenbieten (FR)
(72) Inventeur: DECKERT, Serge, F-67450 Mundolsheim (FR)
(74) Mandataire: Metz, Paul
(86) Numéro de dépôt international: FR9300462
(87) Numéro de publication internationale: WO9323279

(56) Documents cités:
- FR-A- 2 130 084
- US-A- 2 692 032
- US-A- 3 421 279
- US-A- 3 856 344
- US-A- 4 962 622

## Description

La présente invention se rapporte à un élément de platelage destiné à servir de plan porteur pour un plateau ou une plate-forme d'un véhicule utilitaire.

Une des applications visées concerne les véhicules porte-voitures.

Cet élément est fabriqué en grand format en vue de pouvoir se découper aux dimensions exactes des structures de châssis qui portent le platelage.

On utilise actuellement, pour recouvrir l'ossature porteuse d'un plan de chargement de véhicules, des plaques de tôle perforée reposant sur la structure de rigidification d'une base-châssis.

Cette base-châssis comporte des traverses solidarisées à des longerons sur lesquels sont rapportées les plaques de tôle perforée.

Les plateaux porte-véhicules ainsi constitués étant sollicités mécaniquement pendant le transport, il convient d'immobiliser suffisamment les structures porteuses et leurs plaques de recouvrement.

Ainsi, aussi bien les éléments des structures de rigidification du plan support que les plaques perforées sont soudés en de nombreux endroits.

Ces contraintes mécaniques entraînent la multiplication des cordons de soudure nécessaires dans des endroits souvent difficiles d'accès.

L'exposition de ces plateaux aux intempéries impose la fermeture des intervalles au droit des jonctions par une matière étanche.

Ces exigences constructives entraînent des difficultés et un surcoût de fabrication.

Par ailleurs, les traverses utilisées sont constituées par des éléments profilés de section partiellement ou totalement fermée délimitant des cavités difficilement accessibles aux produits de protection antirouille, à la peinture et aux produits d'entretien et de nettoyage même pulvérisés sous pression.

Par manque de protection et d'entretien, ces structures subissent un vieillissement prématuré causé principalement par les intempéries et la difficulté de réaliser une protection efficace.

De plus, le volume intérieur de ces profilés à section partiellement fermée échappe à l'inspection.

En raison des différences notables entre les largeurs de voies des divers véhicules à transporter, il convient de prévoir ces plaques de tôle perforée sur des largeurs conséquentes nécessitant quelquefois deux formats de tôle.

L'élément de platelage selon l'invention définie par la revendication 1 a pour but de remédier à ces principaux inconvénients par la possibilité de fabriquer rapidement et simplement des platelages de grande longueur, longitudinalement autobloqués par encastrement direct sur les traverses de l'ossature porteuse.

L'invention se rapporte également à un procédé de fabrication d'un support utilisable comme élément de platelage ou platelage (Revendication 19). Divers modes de réalisation de l'invention sont précisés dans les revendications dépendantes 2 à 18 et 20 à 31.

A cet effet, l'élément de platelage se caractérise en ce que :
. il est autoportant entre deux soutiens transversaux successifs ;
. il peut être monté par une fixation légère arrivant en complément de son autoblocage longitudinal démontable ;
. il est économique et adapté à la production industrielle en grande série ;
. ses formes lui confèrent une grande facilité de mise en peinture et d'application d'une couche de protection ;
. l'inspection et le nettoyage s'avèrent notablement facilités car les volumes sont visibles et ouverts ;
. les gorges forment des cavités qui peuvent servir au rangement ou à la confection d'un plancher en y engageant des poutres de petite section ;
. on peut protéger la surface du platelage par tout traitement approprié avant de le monter sur son support ;
. l'absence de soudures permet de monter des métaux différents entre la structure porteuse et le platelage, par exemple aluminium sur fer.

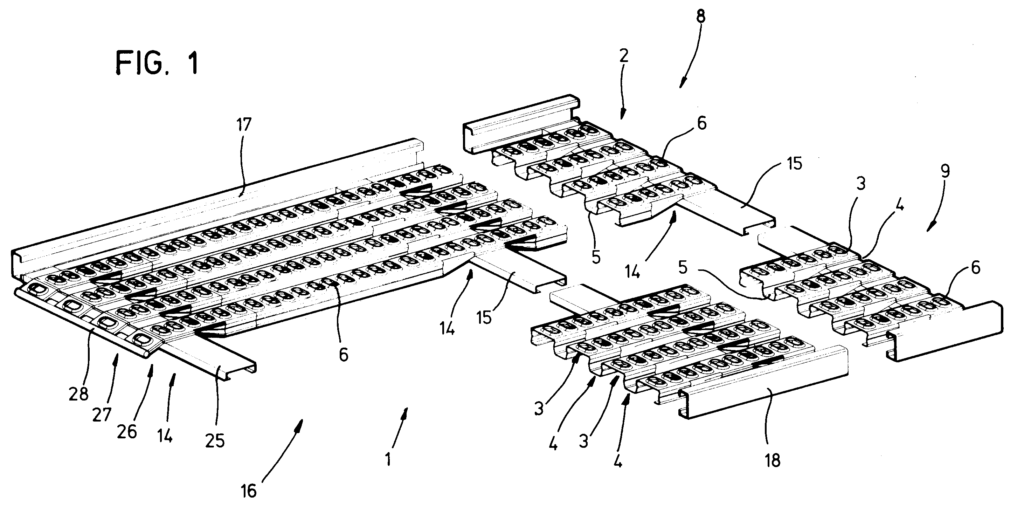

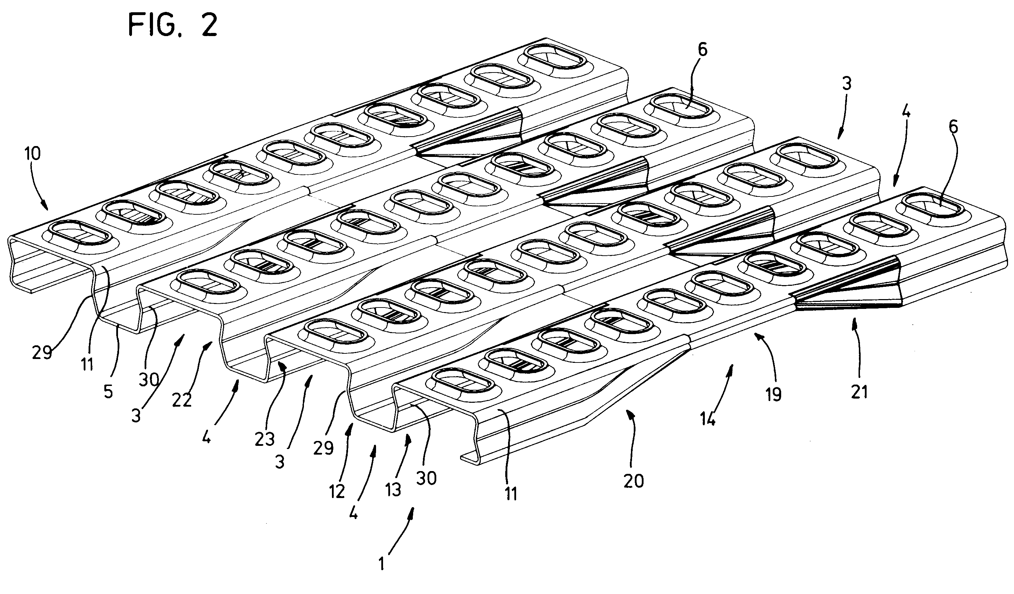

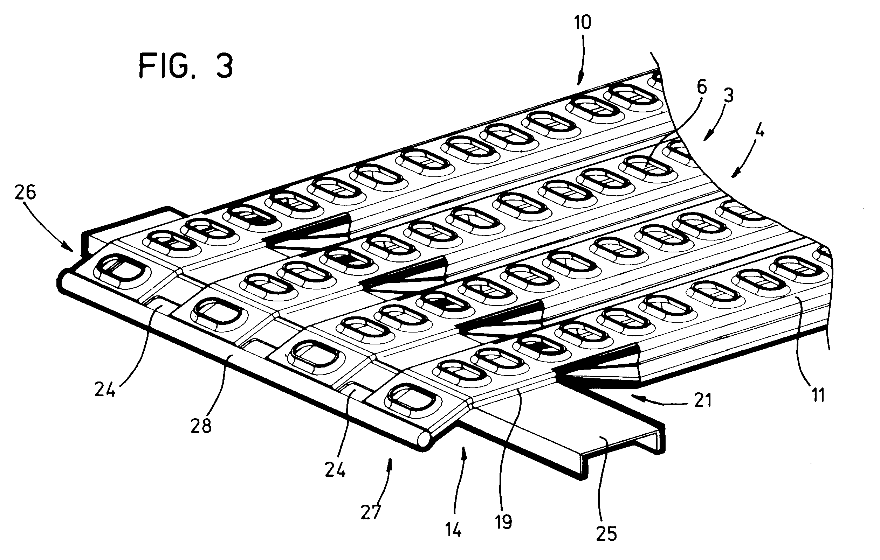

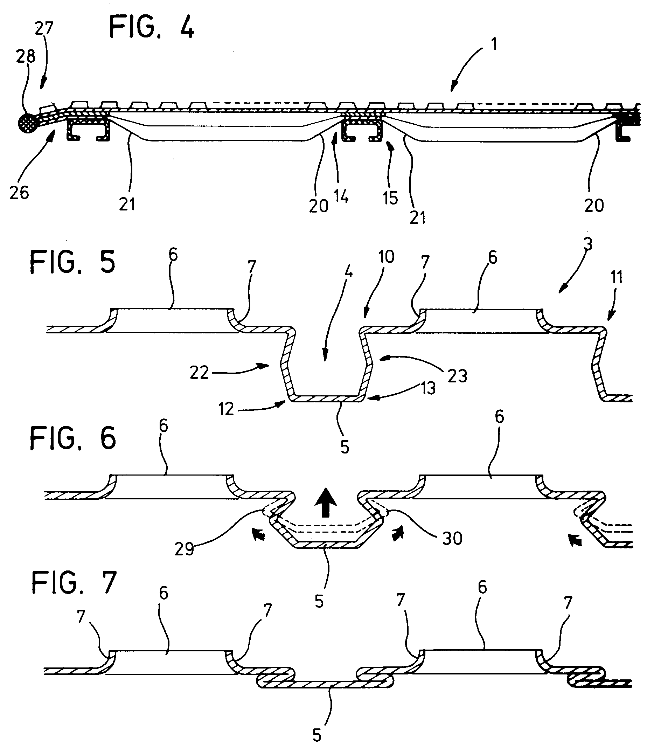

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue générale fragmentaire montrant en perspective un plateau équipé de deux éléments de platelage selon l'invention sur chaque ligne de roulage ;
. la figure 2 est une vue en perspective d'un morceau de platelage au niveau d'une zone transversale de retrait ;
. la figure 3 est une vue en perspective d'un exemple d'extrémité avant conformée en becquet ;
. la figure 4 est une vue en coupe longitudinale de l'élément de platelage le long d'une ligne supérieure de pliage ;
. les figures 5, 6 et 7 sont des vues en coupe transversale d'une gorge respectivement avant, en cours et après pincement-écrasement dans la zone transversale de retrait.

L'invention procède de l'idée générale inventive qui consiste à confectionner un élément de platelage en tôle pliée selon un profil présentant une succession transversale de plages hautes et de gorges, de former par pliage-écrasement de la tôle des zones transversales planes de retrait sans modifier les plages hautes qui peuvent être perforées, et d'utiliser ces zones transversales planes de retrait comme surfaces de portée sur les traverses d'une structure porteuse.

L'élément courant de platelage 1 objet de la présente invention est réalisé à partir d'un format de tôle préalablement pliée en ondes transversales 2 sous la forme d'une succession de créneaux présentant alternativement une plage haute 3, de préférence plane, et une gorge longitudinale 4 à fond 5 par exemple plat.

La tôle du format est ensuite perforée par emboutissage ou découpage selon des lignes longitudinales de perforations 6 le long des parties médianes de chaque plage haute 3.

Les bords tels que 7 des perforations 6 sont, soit relevés pour réaliser une surface anti-dérapante, dans le cas des carrosseries porte-véhicules, soit dirigés vers le bas, c'est-à-dire vers l'intérieur dans le cas d'une surface lisse nécessaire pour une application de transport de fret.

Cette conformation en onde à plages hautes 3 planes et à gorges 4 à fond plat assure la rigidification suffisante de la structure pour l'application visée.

Les plages hautes 3 portant les perforations constituent autant de surfaces de roulage élémentaires séparées par les gorges longitudinales 4.

Comme représenté sur la figure 1, un élément de platelage est formé de plusieurs surfaces de roulage élémentaires juxtaposées constituant ensemble une bande de roulage droite 8 et gauche 9 pour les lignes de roulage d'un véhicule dans le cas de transport de véhicules.

Le profil général du mode d'exécution préféré de l'élément de platelage selon l'invention présente une forme générale en créneaux constitués d'une succession de parois principales qui délimitent entre elles des pliures de rigidification.

On distingue ainsi des pliures supérieures de rigidification telles que 10 et 11 bordant les plages hautes 3 et des pliures inférieures de rigidification telles que 12 et 13 bordant le fond plat 5 des gorges 4.

Selon une des caractéristiques essentielles de l'invention, l'élément de platelage présente à intervalles réguliers ou non des zones transversales de retrait telles que 14 s'étendant sur toute la largeur de l'élément.

Ces zones transversales de retrait servent de surfaces de portée au platelage par lesquelles il repose sur des traverses telles que 15 d'une structure porteuse 16, par exemple un plateau porteur de véhicules comme représenté sur la figure 1.

Ce plateau monté en châssis est délimité longitudinalement par des longerons de bordure droite 17 et gauche 18 le long des bandes de roulage droite 8 et gauche 9.

Les zones transversales de retrait présentent une partie centrale plane 19 de largeur égale ou proche de la partie supérieure de la traverse correspondante, elles sont délimitées de part et d'autre de la partie centrale 19 par la succession transversale d'une rampe gauche telle que 20 et d'une rampe droite telle que 21 pour chacune des gorges et des plages sur une même zone transversale de retrait 14. Pour des raisons de clarté du dessin, une des rampes est représentée en écorché avec brisures droites (effet graphique de nervures).

Les zones transversales de retrait 14 sont obtenues par pliage-écrasement de la matière sur des bandes transversales marquant les zones de retrait.

L'écrasement s'effectue par rapprochement de la face inférieure vers la face supérieure sans déformation des plages hautes 3 éventuellement perforées.

Pour ce faire, chacune des parois latérales gauche 22 et droite 23 des gorges ou flancs de gorges (sur les figures 2 et 5) doit présenter de par sa forme, au moyen de pliures ou tout autre moyen, une aptitude ou prédisposition au flambage-écrasement ou être assistée ou contrainte à ce type de flambage par des moyens extérieurs : surfaces d'appui-butée, pièces d'outil, mâchoires ou autres.

L'écrasement s'effectue par contrainte mécanique de rapprochement sur une zone bien délimitée correspondant à une bande transversale avec maintien d'une surface de plage haute suffisamment étendue située en regard sans déformation de celle-ci.

Au cours de cette opération, la tôle se plie et vient se plaquer dans les zones de retrait 14 contre la sous-face de la plage haute 3 correspondante selon une conformation totalement plane délimitant une face en retrait correspondant à la remontée locale du fond 5 de chaque gorge limitée par l'épaisseur des parois latérales 22 et 23 plaquées par écrasement contre les bords de chaque plage haute.

Un des buts visés par l'invention est de garder les perforations entièrement libres de façon à permettre l'évacuation aisée de l'eau et des saletés mais aussi et surtout pour permettre la pose des crochets des sangles d'arrimage ou autres accessoires venant s'immobiliser dans les perforations.

Pour ce faire, la hauteur des parois latérales 22 et 23 et l'emplacement des lignes de pliage sont choisis convenablement pour éviter à la bordure formée par rabattement-écrasement de la tôle de venir empiéter sur l'ouverture ou même la bordure de chaque perforation 6.

Afin d'évacuer l'eau qui pourrait s'accumuler dans les gorges, on prévoit des ouvertures analogues à celles telles que 24 visibles sur l'extrémité avant situées en fond de gorge au niveau le plus bas entre les deux zones de retrait.

Chaque élément de platelage 1 se termine à l'avant par une zone de retrait pour permettre son appui à l'avant sur une traverse d'extrémité avant 25. L'élément de platelage se poursuit par une extrémité inclinée 26 de manière à constituer un becquet avant 27 d'accès terminé par une bordure d'esthétique et d'appui au sol, par exemple sous la forme d'une barre circulaire transversale 28.

Celle-ci, en raison de la forme circulaire de sa section, peut être utilisée simultanément comme axe d'articulation avec un plateau voisin porteur ou servir de reprise de rampe dans le cas de plusieurs plateaux successifs séparés par une passerelle.

La prise d'articulation s'effectue à chacune des extrémités de la rampe d'extrémité avant ou becquet 27 ou en différents points sur sa longueur au niveau de quelques ou de toutes les ouvertures d'évacuation d'eau 24 situées sur l'extrémité avant 26.

Ce becquet avant permet le chargement de véhicules à partir du sol, sans décalage brutal source de difficultés de chargement et de détérioration des véhicules.

Comme indiqué ci-dessus, le platelage doit pouvoir servir à des véhicules de transport de fret. Dans ce cas, il s'agit de confectionner un plancher lisse sur lequel peuvent glisser les paquets, caisses, conteneurs et autres. A cet effet, on comblera les espaces délimités par les gorges à l'aide d'éléments rectilignes en une autre matière, bois, matière plastique, convenablement conformés pour occuper tout l'espace disponible dans les gorges et venir à ras avec la surface supérieure des plages hautes 3.

On décrira ci-après de façon non limitative plusieurs moyens imaginés pour permettre le flambage des parois latérales ou flancs de gorges.

Il s'agit d'abord de lignes longitudinales intermédiaires de pliage-écrasement telles que 29 et 30 pratiquées le long de chacune des parois latérales à une hauteur convenable correspondant au but recherché de ne pas obturer les ouvertures des perforations.

Ces pliures correspondent à une déformation du plan de la paroi latérale en deux plans inclinés jointifs et donnent à la section des parois des gorges un profil en lignes brisées.

Selon la variante préférée, cette caractéristique se traduit par une section de gorge en ligne brisée, par exemple une section de gorge du type hexagonal sous la forme de deux trapèzes accolés et opposés.

Une réalisation optimale de la variante préférée utilise une forme en deux trapèzes isocèles, par exemple égaux.

On peut également envisager des formes de section des surfaces latérales 22 et 23 bombées concaves ou convexes.

Divers autres moyens produisant les mêmes effets et les mêmes résultats s'avèrent possibles.

On peut citer aussi sur chacune des parois latérales une zone longitudinale traitée de façon à présenter une plus faible résistance mécanique.

On peut citer également une surface d'appui continue le long des gorges ou locale à l'endroit de la déformation.

Cette surface d'appui peut être constituée par une surface quelconque, par exemple une contre-pièce, les mâchoires d'un outil du type écarteur ou pince, ou la surface latérale bombée d'un élément rectiligne placé dans la gorge rigide ou déformable entre un état de repos et un état de contact d'appui-butée.

La présente invention se rapporte également au procédé de fabrication de l'élément de platelage.

Selon la variante de base de ce procédé, on réalise par pliage en continu au défilement dans une longueur de tôle, une onde de profil général en créneaux selon une succession de plages hautes et de gorges, on profile simultanément chacune des parois latérales de tôle selon une forme susceptible de déformation, on perfore la tôle le long des plages hautes par une succession linéaire de perforations, on écrase localement, et à intervalles, l'onde de tôle selon des zones transversales par rapprochement des parois du bas vers le plan supérieur contre une butée en maintenant le plan supérieur en position fixe, et on coupe transversalement l'onde de tôle à la longueur désirée.

Cet écrasement peut s'effectuer facilement par pincement en raison de l'aptitude et de la prédisposition à la déformation, par exemple par flambage, conférées par les formes des parois latérales des gorges.

On peut envisager un outil qui coupe à la longueur voulue et qui presse simultanément.

Le procédé se particularise par les différentes variantes suivantes.

On réalise comme précédemment par pliage au défilement en continu dans un format de tôle une onde de profil général en créneaux selon une succession de plages hautes et de gorges, on perfore la tôle le long des plages hautes par une succession linéaire de perforations, mais on maintient localement sur la zone de perforations s'étendant sur la zone de retrait et de part et d'autre de celle-ci ou tout le long des gorges chacune des parois latérales des gorges pendant l'opération d'écrasement par le contact constant ou temporaire d'appui ou de poussée avec toute surface appropriée de contact en vue d'une assistance mécanique au flambage-écrasement.

La surface de contact d'assistance au flambage est déformable sur commande entre un état de repos et un état de contact d'appui-butée.

La surface d'appui peut être bombée comme par exemple celle d'un tube à section circulaire placé dans chaque gorge. Elle est déformable si le tube envisagé peut se dilater sous l'effet d'un fluide comprimé.

Selon une autre variante, la surface d'appui est celle de la pièce de travail ou contre la pièce d'un outil qui peut être du type à mâchoires, par exemple un écarteur ou une pince.

Ici également, on peut prévoir un outil qui coupe à la longueur voulue et qui presse simultanément.

## Revendications

1. Elément de platelage destiné à servir de plan porteur d'un chargement pour un véhicule utilitaire, caractérisé en ce que son corps est une onde (2) de tôle pliée en une succession transversale de plages hautes planes (3) et de gorges (4), délimitées longitudinalement par des parois latérales (22,23), onde (2) formée à partir d'un format de tôle par pliures longitudinales parallèles (10, 11, 12 et 13) et présentant des zones transversales de retrait (14) résultant d'un écrasement local contrôlé des parois latérales (22,23) des gorges (4) avec rapprochement des fonds (5) des gorges (4) vers le plan supérieur des plages hautes (3) sans déformation de celles-ci, les zones de retrait (14) s'étendant sur des zones transversales de la tôle pour servir de surfaces de portée de l'élément de platelage sur des traverses (15 et 25) d'une structure porteuse (16).

2. Elément selon la revendication 1 caractérisé en ce que l'écrasement local contrôlé s'effectue sur des bandes transversales.

3. Elément selon la revendication 2 caractérisé en ce que l'écrasement local contrôlé s'effectue à intervalle.

4. Elément selon la revendication 3 caractérisé en ce que l'écrasement local contrôlé s'effectue à intervalle régulier.

5. Elément selon l'une quelconque des revendications précédentes caractérisé en ce que les bandes transversales sont continues.

6. Elément selon l'une quelconque des revendications précédentes caractérisé en ce que les parois latérales (22,23) des gorges sont susceptibles d'une déformation par flambage-écrasement.

7. Elément selon l'une quelconque des revendications précédentes, caractérisé en ce que l'écrasement local est total en rapprochement des parois latérales (22,23) des gorges jusqu'à contact de butée contre la face inférieure des plages hautes (3).

8. Elément selon l'une quelconque des revendications précédentes, caractérisé en ce que les plages hautes (3) présentent une succession longitudinale de perforations (6).

9. Elément selon l'une quelconque des revendications précédentes, caractérisé en ce que la forme générale de section droite de l'onde (2) est en créneaux.

10. Elément selon la revendication 9, caractérisé en ce que les parois latérales (22,23) des gorges (4) sont bombées.

11. Elément selon la revendication 10, caractérisé en ce que les parois latérales (22,23) des gorges (4) sont bombées concaves.

12. Elément selon la revendication 10, caractérisé en ce que les parois latérales (22,23) des gorges (4) sont bombées convexes.

13. Elément selon la revendication 9, caractérisé en ce que le profil de section droite des parois latérales (22,23) des gorges (4) est en ligne brisée, chaque paroi latérale étant formée de deux plans qui se coupent selon une ligne intermédiaire de pliage-écrasement (29) ou (30).

14. Elément selon la revendication 13, caractérisé en ce que le profil de section droite des gorges est formé de deux trapèzes jointifs opposés.

15. Elément selon la revendication 14, caractérisé en ce que les côtés obliques des trapèzes sont égaux deux à deux.

16. Elément selon la revendication 14, caractérisé en ce que les côtés obliques de chaque trapèze sont égaux.

17. Elément selon l'une quelconque des revendications précédentes, caractérisé en ce que la hauteur des parois latérales (22,23) et la position des lignes intermédiaires de pliage-écrasement (29,30) sont telles que la largeur de la bordure représentée par ces parois repliées après pliage-écrasement laisse les ouvertures des perforations (6) totalement libres.

18. Elément selon l'une quelconque des revendications précédentes, caractérisé en ce que les gorges (4) sont remplies par des éléments rectilignes pour la confection d'une surface plane continue de chargement.

19. Procédé de fabrication d'un support utilisable comme élément de platelage ou platelage selon l'une quelconque des revendications précédentes, caractérisé en ce que l'on réalise par pliage en continu au défilement dans une longueur de tôle, une onde (2) de profil général en créneaux selon une succession de plages hautes (3) et de gorges (4), en ce que l'on profile simultanément chacune des parois latérales (22,23) de tôle selon une forme en ligne brisée, en ce que l'on perce la tôle le long des plages hautes (3) par une succession linéaire de perforations (6), en ce que l'on écrase, localement et à intervalles, l'onde (2) de tôle selon des zones transversales (14) par pincement du bas vers le plan supérieur contre une butée maintenant le plan supérieur en position fixe, et en ce que l'on coupe transversalement l'onde (2) de tôle à la longueur désirée.

20. Procédé selon la revendication 19, caractérisé en ce que l'on prédispose au flambage les parois latérales (22,23) des gorges (4).

21. Procédé de fabrication d'un élément de platelage selon les revendications 19 ou 20, caractérisé en ce que l'on réalise par pliage au défilement en continu dans un format de tôle une onde (2) de profil général en créneaux selon une succession de plages hautes (3) et de gorges (4), en ce que l'on perce la tôle le long des plages hautes (3) par une succession linéaire de perforations (6), et en ce que l'on maintient localement sur la zone de perforations s'étendant sur la zone de retrait (14) et de part et d'autre de celle-ci chacune des parois latérales pendant l'opération de pincement-écrasement.

22. Procédé selon la revendication 21, caractérisé en ce que l'on utilise une assistance mécanique au flambage.

23. Procédé selon la revendication 22, caractérisé en ce que l'on maintient chacune des parois latérales (22,23) des gorges (4) pendant l'opération de pincement-écrasement par contact d'appui-butée contre une surface d'appui réalisant l'assistance mécanique au flambage-écrasement.

24. Procédé selon la revendication 23, caractérisé en ce que la surface d'appui est déformable entre un état de repos et un état de contact d'appui-butée.

25. Procédé selon la revendication 24, caractérisé en ce que la surface d'appui est déformable et bombée.

26. Procédé selon ta revendication 25, caractérisé en ce que la surface d'appui est la surface latérale d'un élément rectiligne déformable placé dans chaque gorge (4).

27. Procédé selon l'une quelconque des revendications de 23 à 26, caractérisé en ce que la surface d'appui est la pièce de travail d'un outil.

28. Procédé selon la revendication 27, caractérisé en ce que l'outil est un outil du type à mâchoires.

29. Procédé selon la revendication 28, caractérisé en ce que l'outil est du type écarteur.

30. Procédé selon la revendication 28, caractérisé en ce que l'outil est du type pince.

31. Procédé selon l'une quelconque des revendications de 19 à 30, caractérisé en ce que l'on presse pour l'écrasement des zones transversales et que l'on coupe simultanément au format.

## Claims

1. Flooring component which is destined to act as a load support plane for a utility vehicle, characterised in that its body is a wave (2) of plate folded in a transverse succession of flat upper areas (3) and grooves (4) which are delimited longitudinally by lateral walls (22, 23), which wave (2) is formed from plate shaped in parallel longitudinal folds (10, 11, 12 and 13) and has recessed transverse areas (14) obtained from controlled local compression of the lateral walls (22, 23) of the grooves (4), the bases (5) of the grooves (4) being drawn closer to the upper plane of the upper areas (3) without deformation of the latter, the recessed areas (14) extending on transverse areas of the plate in order to act as support surfaces for the flooring component on the side members (15 and 25) of a bearing structure (16).

2. Component according to claim 1, characterised in that the local controlled compression is carried out on transverse strips.

3. Component according to claim 2, characterised in that the local controlled compression is carried out at intervals.

4. Component according to claim 3, characterised in that the local controlled compression is carried out at regular intervals.

5. Component according to any one of the preceding claims, characterised in that the transverse strips are continuous.

6. Component according to any one of the preceding claims, characterised in that the lateral walls (22, 23) of the grooves can be deformed by buckling-compression.

7. Component according to any one of the preceding claims, characterised in that the local compression is total in drawing closer the lateral walls (22, 23) of the grooves, as far as abutment contact against the lower surface of the upper areas (3).

8. Component according to any one of the preceding claims, characterised in that the upper areas (3) have a longitudinal succession of perforations (6).

9. Component according to any one of the preceding claims, characterised in that the general straight cross-section shape of the wave (2) is in the form of crenellations.

10. Component according to claim 9, characterised in that the lateral walls (22, 23) of the grooves (4) are dished.

11. Component according to claim 10, characterised in that the lateral walls (22, 23) of the grooves (4) are dished concavely.

12. Component according to claim 10, characterised in that the lateral walls (22, 23) of the grooves (4) are dished convexly.

13. Component according to claim 9, characterised in that the straight cross-section profile of the lateral walls (22, 23) of the grooves (4) is in the shape of a broken line, each lateral wall consisting of two planes which intersect according to an intermediate folding-compression line (29 or 30).

14. Component according to claim 13, characterised in that the straight cross-section profile of the grooves consists of two opposite adjacent trapeziums.

15. Component according to claim 14, characterised in that the oblique sides of the trapeziums are equal in pairs.

16. Component according to claim 14, characterised in that the oblique sides of the trapeziums are equal.

17. Component according to any one of the preceding claims, characterised in that the height of the lateral walls (22, 23) and the position of the intermediate folding-compression lines (29, 30) are such that the width of the edge represented by these walls folded after folding-compression, leaves the apertures of the perforations (6) totally free.

18. Component according to any one of the preceding claims, characterised in that the grooves (4) are filled by straight components in order to produce a flat continuous loading surface.

19. Method for producing a support which can be used as a flooring component or flooring according to any one of the preceding claims, characterised in that there is produced by folding continuously along a length of plate, a wave (2) with a generally crenellated profile according to a succession of upper areas (3) and grooves (4), in that each of the lateral walls (22, 23) of plate is profiled simultaneously according to a shape in a broken line, in that the length of the upper areas (3) of the plate contains a linear succession of perforations (6), in that the wave (2) of plate is compressed locally and at intervals according to transverse areas (14), by pressing the base towards the upper plane against a stop which maintains the upper plate in a fixed position, and in that the wave (2) of plate is cut transversely to the required length.

20. Method according to claim 19, characterised in that the lateral walls (22, 23) of the grooves (4) are subjected to buckling.

21. Method for producing a flooring component according to claims 19 or 20, characterised in that there is produced by folding continuously along a plate shape, a wave (2) with a profile generally crenellated according to a succession of upper areas (3) and grooves (4), in that along the upper areas (3), the plate contains a linear succession of perforations (6), and in that during the operation of pressing-crushing, each of the lateral walls is retained locally on the area of perforations, which extends along the recessed area (14) and on both sides of the latter.

22. Method according to claim 21, characterised in that mechanical assistance is used in the buckling operation.

23. Method according to claim 22, characterised in that each of the lateral walls (22, 23) of the grooves (4) is retained during the operation of pressing-crushing, by contact of a support-stop against a support surface which provides the mechanical assistance in the buckling-compression operation.

24. Method according to claim 23, characterised in that the support surface can be deformed between a rest condition and a support-stop contact condition.

25. Method according to claim 24, characterised in that the support surface is deformable and dished.

26. Method according to claim 25, characterised in that the support surface is the lateral surface of a deformable straight component placed in each groove (4).

27. Method according to any one of claims 23 to 26, characterised in that the support surface is the work piece of a tool.

28. Method according to claim 27, characterised in that the tool is a tool of the jaw type.

29. Method according to claim 28, characterised in that the tool is of the spreader type.

30. Method according to claim 28, characterised in that the tool is of the gripper type.

31. Method according to any one of claims 19 to 30, characterised in that transverse areas are pressed for the compression, and cutting to size takes place simultaneously.

## Patentansprüche

1. Belagelement zur Verwendung als Ladefläche für ein Nutzfahrzeug, dadurch gekennzeichnet, daß sein Korpus ein Wellblech (2) ist, des in einer Folge von Plateau-Bereichen (3) und Rinnen (4), die in Längsrichtung durch Seitenwände (22, 23) begrenzt sind, gewellt ist, wobei das Wellblech (2) aus einem Blechformat durch parallele Längsfalze (10, 11, 12, 13) gebildet ist und in Querrichtung (14) eingezogene Bereiche aufweist, welche durch gesteuertes lokales Eindrücken der Seitenwände (22, 23) der Rinnen (4) unter Annäherung der Böden (5) der Rinnen (4) an die obere Ebene der Plateau-Bereiche (3) ohne Deformation derselben erhalten werden, wobei sich die eingezogenen Bereiche (14) über Querbereiche des Blechs erstrecken, um als Auflageflächen des Belagelements auf den Quertraversen (15 und 25) einer Tragstruktur (16) zu dienen.

2. Element nach Anspruch 1, dadurch gekennzeichnet, daß das gesteuerte lokale Eindrücken entlang Querstreifen stattfindet.

3. Element nach Anspruch 2, dadurch gekennzeichnet, daß das gesteuerte lokale Eindrücken in Abständen erfolgt.

4. Element nach Anspruch 3, dadurch gekennzeichnet, daß das gesteuerte lokale Eindrücken in regelmäßigen Abständen erfolgt.

5. Element nach einem der vorangehenden Ansprüche, dadurch gekennzeichnet, daß die Querstreifen ununterbrochen sind.

6. Element nach einem der vorangehenden Ansprüche, dadurch gekennzeichnet, daß die Seitenwände (22, 23) der Rinnen für ein Umformen durch Knick-Drücken eingerichtet sind.

7. Element nach einem der vorangehenden Ansprüche, dadurch gekennzeichnet, daß das lokale Eindrücken durch Annähern der Seitenwände (22, 23) der Rinnen an die Unterseite der oberen Plateau-Bereiche (3) bis vollständig auf Anschlag an denselben erfolgt.

8. Element nach einem der vorangehenden Ansprüche, dadurch gekennzeichnet, daß die oberen Plateau-Bereiche (3) eine Längsfolge von Perforationen (6) aufweisen.

9. Element nach einem der vorangehenden Ansprüche, dadurch gekennzeichnet, daß die Querschnittsform der Welle (2) zinnenförmig ist.

10. Element nach Anspruch 9, dadurch gekennzeichnet, daß die Seitenwände (22, 23) der Rinnen (4) gewölbt sind.

11. Element nach Anspruch 10, dadurch gekennzeichnet, daß die Seitenwände (22, 23) der Rinnen (4) konkav gewölbt sind.

12. Element nach Anspruch 10, dadurch gekennzeichnet, daß die Seitenwände (22, 23) der Rinnen (4) konvex gewölbt sind.

13. Element nach Anspruch 9, dadurch gekennzeichnet, daß das Querschnittsprofil der Seitenwände (22, 23) der Rinnen (4) eine Sollbiegelinie aufweist, wobei jede Seitenwand durch zwei Ebenen gebildet ist, die sich an einer Knick-Drücklinie (29) oder (30) schneiden.

14. Element nach Anspruch 13, dadurch gekennzeichnet, daß das Querschnittsprofil der Rinnen (4) durch zwei gegeneinandergesetzte Trapeze gebildet ist.

15. Element nach Anspruch 14, dadurch gekennzeichnet, daß die geneigten Seiten der Trapeze paarweise gleich sind.

16. Element nach Anspruch 14, dadurch gekennzeichnet, daß die geneigten Seiten jedes Trapezes gleich sind.

17. Element nach einem der vorangehenden Ansprüche, dadurch gekennzeichnet, daß die Höhe der Seitenwände (22, 23) und die Lage der Knick-Drücklinien (29, 30) derart sind, daß die Breite des durch die gefalteten Wände nach dem Knick-Drücken gebildeten Falzes die Perforationsöffnungen (6) vollständig freiläßt.

18. Element nach einem der vorangehenden Ansprüche, dadurch gekennzeichnet, daß die Rinnen (4) durch geradlinige Elemente gefüllt sind, um eine durchgehende ebene Ladefläche zu bilden.

19. Verfahren zur Herstellung einer als Belagelement oder Belag geeigneten Auflage nach einem der vorangehenden Ansprüche, dadurch gekennzeichnet, daß durch kontinuierliches Falzen von der Spule in Blechlänge eine Welle (2) mit im wesentlichen zinnenförmigem Profil mit aufeinanderfolgenden oberen Plateau-Bereichen (3) und Rinnen (4) gebildet wird, daß gleichzeitig jede Seitenwand (22, 23) des Blechs in Form einer abgekanteten Linie profitiert wird, daß das Blech entlang der oberen Plateau-Bereiche (4) durch Lochen mit einer linearen Folge von Perforationen (6) versehen wird, daß das Wellblech (2) lokal und in Abständen in Querbereichen (14) durch Quetschen von unten in Richtung der oberen Ebene gegen Anschlag, der die obere Ebene fest positioniert, gedrückt und daß das Wellblech (2) auf die gewünschte Länge quer geschnitten wird.

20. Verfahren nach Anspruch 19, dadurch gekennzeichnet, daß die Seitenwände (22, 23) der Rinnen (4) durch Knicken vorgeformt werden.

21. Verfahren zur Herstellung eines Belagelementes nach Anspruch 19 oder 20, dadurch gekennzeichnet, daß durch kontinuierliches Falzen von der Spule im Blechformat eine Welle (2) mit im wesentlichen zinnenförmigen Profil mit einer Folge von oberen Plateau-Bereichen (3) und Rinnen (4) gebildet wird, daß das Blech entlang der oberen Plateau-Bereiche (3) durch Lochen mit einer linearen Folge von Perforationen (6) versehen wird und daß jede der Seitenwände an dem sich über den eingezogenen Bereich (14) und beiderseits von diesem erstreckenden Perforationsbereich während der Knick-/Druckeinwirkung lokal abgestützt wird.

22. Verfahren nach Anspruch 21, dadurch gekennzeichnet, daß beim Knicken eine mechanische Hilfseinrichtung verwendet wird.

23. Verfahren nach Anspruch 22, dadurch gekennzeichnet, daß jede Seitenwand (22, 23) der Rinnen (4) während der Knick-/Druckeinwirkung durch Stützkontakt gegen eine die mechanische Hilfseinrichtung beim Knick-Drücken bildende Anlagefläche abgestützt wird.

24. Verfahren nach Anspruch 23, dadurch gekennzeichnet, daß die Anlagefläche zwischen einer Ruhestellung und einer Stützstellung umformbar ist.

25. Verfahren nach Anspruch 24, dadurch gekennzeichnet, daß die Anlagefläche umformbar und gewölbt ist.

26. Verfahren nach Anspruch 25, dadurch gekennzeichnet, daß die Anlagefläche die Seitenfläche eines in jeder Rinne (4) angeordneten, umformbaren, geradlinigen Elementes ist.

27. Verfahren nach einem der Ansprüche 23 bis 26, dadurch gekennzeichnet, daß die Anlagefläche das Arbeitsteil eines Werkzeugs ist.

28. Verfahren nach Anspruch 27, dadurch gekennzeichnet, daß das Werkzeug ein Backenwerkzeug ist.

29. Verfahren nach Anspruch 28, dadurch gekennzeichnet, daß das Werkzeug ein Abstandshalter ist.

30. Verfahren nach Anspruch 28, dadurch gekennzeichnet, daß das Werkzeug eine Art Klemme ist.

31. Verfahren nach einem der Ansprüche 29 bis 30, dadurch gekennzeichnet, daß das Druckumformen in Querbereichen und das Schneiden auf Format gleichzeitig erfolgt.
